# EUROPEAN PATENT APPLICATION

(11) **EP 3 270 364 A2**
(43) Date of publication of application: **17.01.2018**
(21) Application number: 17173215.9
(22) Date of filing: 29.05.2017
(51) Int. Cl.: G08G 1/14

(54) **DETECTION METHOD AND APPARATUS OF A STATUS OF A PARKING LOT AND ELECTRONIC EQUIPMENT**

(30) Priority: 11.07.2016 CN 201610540079
(71) Applicant: Fujitsu Limited, Kawasaki-shi, Kanagawa 211-8588 (JP)
(72) Inventor: ZHANG, Guocheng, Beijing, 100027 (CN)
(74) Representative: Hoffmann Eitle

(57) **Abstract**

Embodiments of this application provide a detection method and apparatus of a status of a parking lot and electronic equipment. The detection apparatus includes: a parking lot motion detecting unit configured to detect whether there exists a moving object in the parking lot according to the surveillance image of the parking lot; a blocking motion detecting unit configured to, when there exists no moving object in the parking lot, detect whether there exists a moving object in a blocking detection area of the parking lot in the surveillance image; wherein, the blocking detection area is adjacent to the parking lot; a blocking detecting unit configured to, when there exists no moving object in the blocking detection area, detect whether there exists in the blocking detection area a blocking object blocking the parking lot; and a parking lot status determining unit configured to determine the status of the parking lot according to a detection result of the blocking detecting unit. With the embodiments of this application, accuracy of detection of the status of the parking lot may be improved.

## Description

### Technical Field

This application relates to the field of information technologies, and in particular to a detection method and apparatus of a status of a parking lot and electronic equipment.

### Background

In the current society, more and more families have begun to possess and use cars, and more and more car users are suffering from an accompanying problem of parking, who are eager for information on "unoccupied/occupied" for parking places nearby whenever and wherever necessary to improve parking efficiencies. Hence, a parking place needs to detect statuses of parking lots, so as to notify information on the statuses of the parking lots to the users in a real-time manner. For a large-scale parking lot, it is obviously impractical for human to track a change of a status of each parking lot.

With development of sciences and technologies, image processing technologies are more and more widely used in various fields, including the field of detection of statuses of parking lots.

In a previous application 1 (No. CN 2015100705589.X) of the applicant of this application, a method for quickly and accurately detecting a status of a parking lot is contained, in which a moving status of an object in a parking lot is detected, a stable parking lot map is generated for a parking lot with no object, and an image is made clear by post-processing, then the status of the parking lot is determined on the basis of a profilometry and classifier detection.

It should be noted that the above description of the background art is merely provided for clear and complete explanation of this application and for easy understanding by those skilled in the art. And it should not be understood that the above technical solution is known to those skilled in the art as it is described in the background art of this application.

### Summary

It was found by the inventors of this application that for many parking places in busy sites, there are vehicles often passing a vehicle lane around a parking lot. In the above application 1, the moving vehicles on the vehicle lane can be identified, and hence, there is no effect on a result of detection of a status of the parking lot.

However, in some cases, vehicles will stay unmoved on the vehicle lane for several to decades of minutes to wait for passengers to get on/off, or for loading/unloading of goods, or wait for another vehicle to leave the parking lot. Hence, in a surveillance image, theses vehicles stably parking on the vehicle lane will block images of vehicles on parking lots. And these stably parked vehicles will cause obvious changes of images of the stable parking lots, thereby causing errors in the results of detection of the statuses of the parking lots. For example, due to the blocks resulted from the stably parked vehicles, an occupied parking lot will be changed into a status of "unoccupied" as no information on vehicle is detected, and such an status of "unoccupied" will last, and a normal occupied status will be back until the stably parked vehicles causing the blocks leave.

Embodiments of this application provide a detection method and apparatus of a status of a parking lot and electronic equipment, in which whether a parking lot is blocked is determined by detecting blocking detection area around the parking lot, thereby determining a status of the parking lot, and improving accuracy of detection of the status of the parking lot.

According to a first aspect of the embodiments of this application, there is provided a detection apparatus of a status of a parking lot, which detects the status of the parking lot on the basis of a surveillance image of the parking lot, the detection apparatus including:
a parking lot motion detecting unit configured to detect whether there exists a moving object in the parking lot according to the surveillance image of the parking lot;
a blocking motion detecting unit configured to, when there exists no moving object in the parking lot, detect whether there exists a moving object in a blocking detection area of the parking lot in the surveillance image; wherein, the blocking detection area is adjacent to the parking lot;
a blocking detecting unit configured to, when there exists no moving object in the blocking detection area, detect whether there exists in the blocking detection area a blocking object blocking the parking lot; and
a parking lot status determining unit configured to determine the status of the parking lot according to a detection result of the blocking detecting unit.

According to a second aspect of the embodiments of this application, there is provided a detection method of a status of a parking lot, which detects the status of the parking lot on the basis of a surveillance image of the parking lot, the detection method including:
detecting whether there exists a moving object in the parking lot according to the surveillance image of the parking lot;
when there exists no moving object in the parking lot, detecting whether there exists a moving object in a blocking detection area of the parking lot in the surveillance image; wherein, the blocking detection area is adjacent to the parking lot;
when there exists no moving object in the blocking detection area, detecting whether there exists in the blocking detection area a blocking object blocking the parking lot; and
determining the status of the parking lot according to a detection result of the blocking object detection result.

According to a third aspect of the embodiments of this application, there is provided electronic equipment, including the detection apparatus of a status of a parking lot as described in the first aspect.

An advantage of the embodiments of this application exists in that accuracy of detection of the status of the parking lot may be improved.

With reference to the following description and drawings, the particular embodiments of this application are disclosed in detail, and the principle of this application and the manners of use are indicated. It should be understood that the scope of the embodiments of this application is not limited thereto. The embodiments of this application contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

### Brief Description of the Drawings

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is a schematic diagram of a detection apparatus of Embodiment 1 of this application;
FIG. 2 is a schematic diagram of a blocking detecting unit of Embodiment 1 of this application;
FIG. 3 is a schematic diagram of a foreground detecting unit of Embodiment 1 of this application;
FIG. 4 is a schematic diagram of a parking lot which is not blocked of Embodiment 1 of this application;
FIG. 5 is a schematic diagram of a parking lot which is blocked of Embodiment 1 of this application;
FIG. 6 is a schematic diagram of foreground detection to which FIG. 5 corresponds;
FIG. 7 is an enlarged schematic diagram of a blocking detection area of FIG. 5;
FIG. 8 is a histogram of a gray scale of the blocking detection area of FIG. 5;
FIG. 9 is another schematic diagram of the parking lot which is not blocked of Embodiment 1 of this application;
FIG. 10 is a schematic diagram of foreground detection to which FIG. 9 corresponds;
FIG. 11 is an enlarged schematic diagram of a blocking detection area of FIG. 9;
FIG. 12 is a histogram of a gray scale of the blocking detection area of FIG. 9;
FIG. 13 is a schematic diagram of a structure of the electronic equipment of Embodiment 2 of this application;
FIG. 14 is a flowchart of the detection method of Embodiment 3 of this application;
FIG. 15 is a flowchart of a method for detecting whether there exists a blocking object on the basis of foreground detection; and
FIG. 16 is a flowchart of the detection method of a status of a parking lot of Embodiment 3 of this application.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

### Embodiment 1

Embodiment 1 of this application provides a detection apparatus of a status of a parking lot, which detects the status of the parking lot on the basis of a surveillance image of the parking lot.

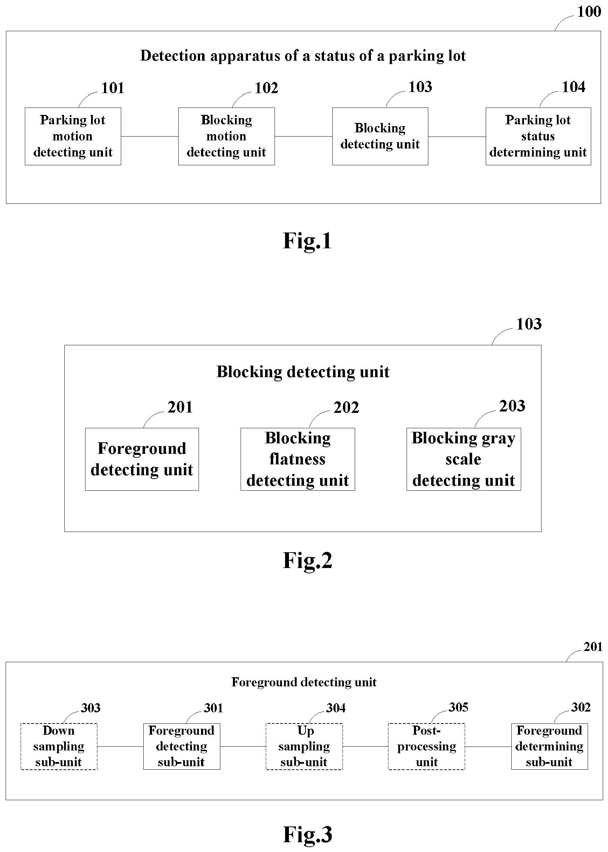

FIG. 1 is a schematic diagram of the detection apparatus of Embodiment 1. As shown in FIG. 1, the detection apparatus 100 may include a parking lot motion detecting unit 101, a blocking motion detecting unit 102, a blocking detecting unit 103 and a parking lot status determining unit 104.

In this embodiment, the parking lot motion detecting unit 101 detects whether there exists a moving object in the parking lot according to the surveillance image of the parking lot;
the blocking motion detecting unit 102, when there exists no moving object in the parking lot, detects whether there exists a moving object in a blocking detection area of the parking lot in the surveillance image; wherein, the blocking detection area is adjacent to the parking lot;
the blocking detecting unit 103, when there exists no moving object in the blocking detection area, detects whether there exists in the blocking detection area a blocking object blocking the parking lot;
and the parking lot status determining unit 104 determines the status of the parking lot according to a detection result of the blocking detecting unit.

According to this embodiment, whether there exists a blocking object blocking the parking lot in the blocking detection area adjacent to the parking lot is detected, and the status of the parking lot is determined according to a result of detection whether there exists the blocking object. Hence, an effect of a vehicle statically parked on a vehicle lane around the parking lot on the result of detection of the status of the parking lot may be avoided.

In this embodiment, the surveillance image of the parking lot may be obtained by using a prior art. For example, it may be obtained by capturing the parking lot by a camera provided at the parking lot.

In this embodiment, the parking lot motion detecting unit 101 may detect whether there exists a moving object in the parking lot according to the prior art. For example, the parking lot motion detecting unit 101 may process the surveillance image by using a foreground detection method, so as to detect whether there exists a moving object in the parking lot. And the moving object in this embodiment may be a moving vehicle, or a moving pedestrian, etc.

When the parking lot motion detecting unit 101 detects that there exists a moving object in the parking lot, it shows that the parking lot is in an unstable status; for example, there is a vehicle entering or leaving from the parking lot. When the parking lot motion detecting unit 101 detects that there exists no moving object in the parking lot, it shows that the parking lot is in a stable status. As to whether the stable status is that the parking lot is occupied or unoccupied, it needs the parking lot status determining unit 104 to determine.

In this embodiment, in a case where the parking lot motion detecting unit 101 detects that there exists no moving object in the parking lot, the blocking motion detecting unit 102 may further detect whether there exists a moving object in the blocking detection area. For example, the blocking detection area may be an area adjacent to the parking lot, and a shape and size of the blocking detection area may be set as demanded. For example, the blocking detection area may be located at an entrance and/or exit of the parking lot, and is at an outer side of the parking lot; and the blocking detection area may be of a rectangular shape, and a side length of it may be substantially the same as a width of the parking lot.

In this embodiment, the prior art may be referred to for a method for detecting whether there exists a moving object in the blocking detection area by the blocking motion detecting unit 102, which is not limited in this embodiment.

When the blocking motion detecting unit 102 detects that there exists a moving object in the blocking detection area, it shows that the blocking detection area is in an unstable status; for example, there is a vehicle passing the blocking detection area. When the blocking motion detecting unit 102 detects that there exists no moving object in the blocking detection area, it shows that the blocking detection area is in a stable status. As to whether the stable status of the blocking detection area is the status that there exists a blocking object or the status that there exists no blocking object, it needs the blocking detecting unit 103 to detect.

In this embodiment, when the blocking motion detecting unit 102 detects that there exists no moving object in the blocking detection area, the blocking detecting unit 103 may detect whether there exists in the blocking detection area a blocking object blocking the parking lot.

In this embodiment, the blocking detecting unit 103 may detect whether there exists a blocking object in the blocking detection area by using multiple methods, description of these methods being going to be given later.

In this embodiment, the parking lot status determining unit 104 may determine the status of the parking lot according to the detection result of the blocking detecting unit 103. For example, when the blocking detecting unit 103 detects that there exists no blocking object in the blocking detection area, the parking lot status determining unit 104 may generate a stable image of the parking lot, and determines the status of the parking lot on the basis of the stable image of the parking lot; and when the blocking detecting unit 103 detects that there exists a blocking object in the blocking detection area, the parking lot status determining unit 104 may determine that the status of the parking lot is unchanged; that is, if the parking lot was determined previously as being occupied, it is still determined as being occupied this time; and if it was determined previously as being unoccupied, it is still determined as being unoccupied this time.

In this embodiment, the above-mentioned application 1 may be referred to for a method for determining the status of the parking lot according to the stable image of the parking lot by the parking lot status determining unit 104, which shall not be described herein any further.

A structure of the blocking detecting unit 103 shall be described below with reference to the accompanying drawings.

FIG. 2 is a schematic diagram of the blocking detecting unit of Embodiment 1 of this application. As shown in FIG. 2, the blocking detecting unit 103 may include a foreground detecting unit 201.

In this embodiment, the foreground detecting unit 201 may perform foreground detection on the blocking detection area, and detect whether there exists the blocking object in the blocking detection area according to a result of the foreground detection.

FIG. 3 is a schematic diagram of the foreground detecting unit of Embodiment 1 of this application. As shown FIG. 3,

In this embodiment, the foreground detecting unit 201 may include a foreground detecting sub-unit 301 and a foreground determining sub-unit 302.

In this embodiment, the foreground detecting sub-unit 301 may perform foreground detection for the blocking detection area in the surveillance image on the basis of background modeling, and the foreground determining sub-unit 302 may determine that there exists a blocking object in the blocking detection area when a foreground of the blocking detection area detected by the foreground detecting sub-unit 301 satisfies a predetermined condition.

In this embodiment, the foreground detecting sub-unit 301 may perform background modeling for the blocking detection area in the surveillance image to generate a background, and detect the foreground of the blocking detection area in the surveillance image on the basis of the background. For example, the prior art may be referred to for a method of background modeling and a method for detecting the foreground by using the background, which shall not be described herein any further.

In this embodiment, the foreground detecting sub-unit 301 may make the background to be updated, and may set a time interval for background update by recording the time period of parking of a vehicle. For example, the time interval for background update may be more than ten minutes, etc. If the time interval for background update is too long, a false foreground induced by rays varying along the time may possibly be detected. And if the time interval for background update is too short, it is possible that a foreground cannot be correctly detected due to foreground ablation.

Furthermore, in this embodiment, as shown in FIG. 3, the foreground detecting unit 201 may further include a down sampling sub-unit 303, and an up sampling sub-unit 304, etc. The down sampling sub-unit 303 may perform down sampling for the surveillance image, and input the down sampled surveillance image into the foreground detecting sub-unit 301; and the up sampling sub-unit 304 may perform up sampling for the detection result of the foreground detecting sub-unit 301, and input the processed detection result of the foreground into the foreground determining sub-unit 302.

In this embodiment, by providing the down sampling sub-unit 303, an amount of operation of the foreground detection by the foreground detecting sub-unit 301 may be lowered. For example, the number of pixels of an original surveillance image is 1920*1080, if foreground detection is directly performed on the original surveillance image, a speed of operation is relatively slow, and a needed memory is relatively large. By the down sampling of the down sampling sub-unit 303, the number of pixels of the original surveillance image may be converted into 640*480. Hence, an amount of operation of the foreground detection on the down sampled image is relatively small. In this embodiment, the up sampling sub-unit 304 may make the detection result of the foreground of the foreground detecting sub-unit 301 to be recovered as having the same number of pixels as the original surveillance image.

In this embodiment, as shown in FIG. 3, the foreground detecting unit 201 may further include a post-processing unit 305 configured to perform median filtering on the detection result of the foreground of the foreground detecting sub-unit 301, and input a result after the median filtering into the foreground determining sub-unit 302. By the filtering processing by the post-processing unit 305, an effect of noise in the detection result of the foreground may be eliminated.

In FIG. 3 of this embodiment, the post-processing unit 305 may be provided after the up sampling sub-unit 304. However, this embodiment is not limited thereto; for example, the post-processing unit 305 may be provided before the up sampling sub-unit 304.

In this embodiment, the foreground determining sub-unit 302 may determine whether there exists a blocking object in the blocking detection area according to the foreground of the blocking detection area detected by the foreground detecting sub-unit 301. For example, when an area of the foreground of the blocking detection area detected by the foreground detecting sub-unit 301 is greater than or equal to a predetermined threshold, it determines that there exists a blocking object in the blocking detection area. Furthermore, the foreground determining sub-unit 302 may determine a position of the blocking object in the blocking detection area according to a position of the foreground.

In this embodiment, the blocking detecting unit 103 may not only detect a blocking object via the foreground detecting unit 201, but also detect a blocking object via other units.

As shown in FIG. 2, the blocking detecting unit 103 may include a blocking flatness detecting unit 202 configured to detect whether the blocking detection area in the surveillance image is flat, so as to determine whether there exists a blocking object. For example, when the blocking detection area is flat, it shows that the ground of the blocking detection area is detected, and it is determined that the area is not occupied, that is, there exists no blocking object; and when the blocking detection area is not flat, it shows that the surface of the blocking detection area is detected. For example, such nonflatness may possibly reflect a combination of a vehicle window, a vehicle body and the ground, hence, it is determined that there exists a blocking object in the area.

In this embodiment, the blocking flatness detecting unit 202 may detect whether the blocking detection area in the surveillance image is flat according to a relationship between a mean square error or a mean absolute error of pixel values of a predetermined number of pixels of the blocking detection area in the surveillance image and a predetermined threshold value. For example, when the mean square error is greater than the predetermined threshold value, it is determined that the blocking detection area is not flat; and when the mean square error is less than the predetermined threshold value, it is determined that the blocking detection area is flat.

In this embodiment, a pixel value of a pixel may be a gray scale value of the pixel, or a pixel value of an R channel, or a G channel, or a B channel, etc., and the predetermined number of pixels may be pixels of a number of a specific occupation percentage. For example, after pixels occupying 10% of a total number of pixels of the blocking detection area starting from a pixel of a highest pixel value and pixels occupying 10% of the total number of pixels of the blocking detection area starting from a pixel of a lowest pixel value are removed, pixels occupying 80% of the total number of pixels of the blocking detection area are remained. Hence, effects resulted from marks, such as parking lines on the ground, etc., and noises, on the blocking detection area, may be eliminated, and accuracy of detection of flatness may be improved.

Furthermore, in this embodiment, the blocking flatness detecting unit 202 may determine the predetermined number of pixels on the basis of a histogram of the pixel values of the blocking detection area in the surveillance image.

In this embodiment, the predetermined threshold value may be determined according to an average pixel value of the predetermined number of pixels of the blocking detection area in the surveillance image. For example, the predetermined threshold value may be 10% of the average pixel value. Thus, the predetermined threshold value may be a dynamic threshold value, which may avoid effects of factors, such as light, etc., in the surveillance image, on the result of detection, and may be advantageous to more accurately detect whether the blocking detection area is flat.

In this embodiment, by providing the blocking flatness detecting unit 202, an effect of light on the detection of blocking may be avoided. Therefore, even in cases of insufficient ray, or nights affected by lamp light, the detection of blocking may be performed accurately.

In this embodiment, as shown in FIG. 2, the blocking detecting unit 103 may include a blocking gray scale detecting unit 203 configured to determine whether there exists the blocking object according to an average gray scale value of the pixels of the blocking detection area in the surveillance image. For example, when the average gray scale value is greater than a first predetermined value, it is determined that there exists an object in the blocking detection area brighter than the ground of the blocking detection area, and hence, it is determined that there exists the blocking object; and when the average gray scale value is less than a second predetermined value, it is determined that there exists an object in the blocking detection area darker than the ground of the blocking detection area, and hence, it is also determined that there exists the blocking object. Furthermore, the first predetermined value may be greater than the second predetermined value.

In this embodiment, by providing the blocking gray scale detecting unit 203, the blocking detection may be quickly performed in a simple manner, thereby improving a speed of the detection.

In this embodiment, the blocking detecting unit 103 may include any one of the foreground detecting unit 201, the blocking flatness detecting unit 202 and the blocking gray scale detecting unit 203; or the blocking detecting unit 103 may include at least two of these units. For example, the blocking detecting unit 103 may include the foreground detecting unit 201 and the blocking flatness detecting unit 202, and when the foreground detecting unit 201 detects that there exists a blocking object in the blocking detection area, the blocking flatness detecting unit 202 may further detect whether there exists a blocking object in the blocking detection area, thereby avoiding an effect of a false foreground induced by lamp light on the foreground detecting unit 201. Or, the blocking detecting unit 103 may include the foreground detecting unit 201 and the blocking gray scale detecting unit 203, and when the foreground detecting unit 201 detects that there exists a blocking object in the blocking detection area, the blocking gray scale detecting unit 203 may further detect whether there exists a blocking object in the blocking detection area, thereby verifying the detection result of the foreground detecting unit 201 in a fast manner.

An operational principle of the blocking detecting unit 103 shall be described below by way of an example. For example, the blocking detecting unit 103 may include the foreground detecting unit 201 and the blocking flatness detecting unit 202.

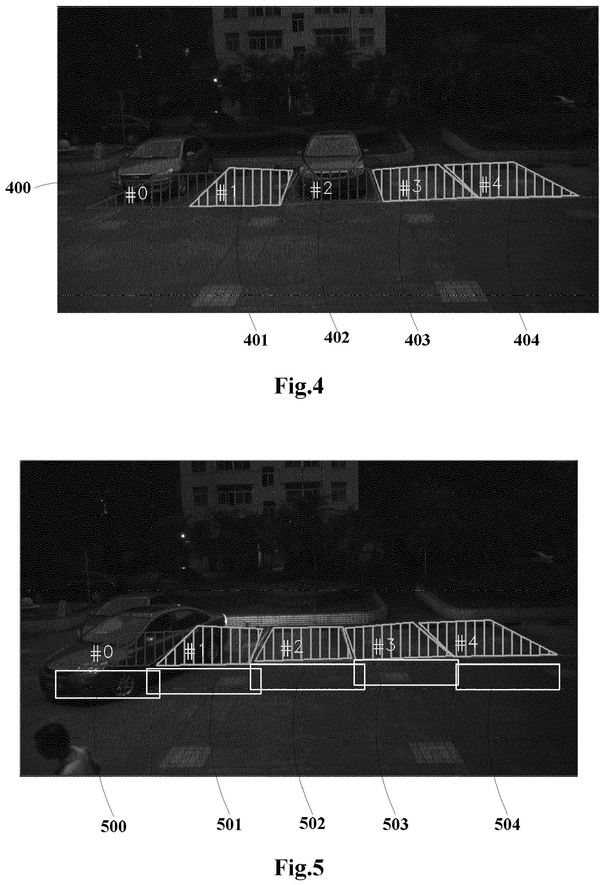

FIG. 4 is a schematic diagram of a parking lot which is not blocked of this embodiment. As shown in FIG. 4, there are five parking lots in the surveillance image 400, which are respectively marked by 400-404 from the left to the right. Parking lots 400 and 402 are occupied, parking lots 401, 403 and 404 are unoccupied, and all the parking lots are not blocked.

FIG. 5 is a schematic diagram of a parking lot which is blocked of this embodiment. As shown in FIG. 5, blocking detection areas 500-504 are adjacent to parking lots 400-404, respectively, and parking lot 400 is blocked by vehicle 505.

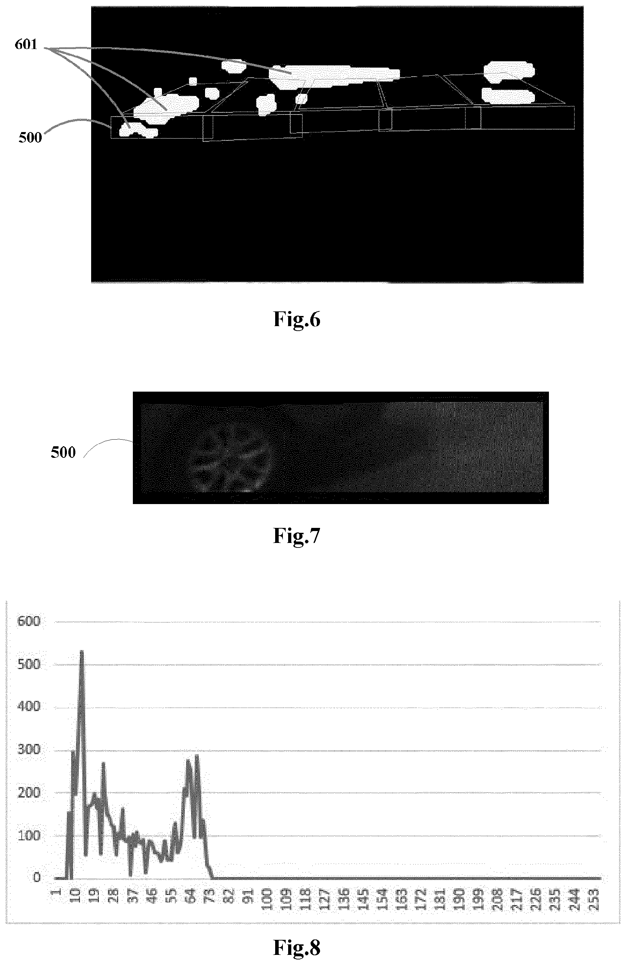

FIG. 6 is a schematic diagram of foreground detection to which FIG. 5 corresponds, in which white pixel 601 denotes a foreground of the image. As shown in FIG. 6, there exists a foreground in blocking detection area 500.

In this embodiment, the foreground detecting unit 201 may determine that there exists a blocking object in blocking detection area 500 on the basis of the schematic diagram of foreground detection shown in FIG. 6, in which case the blocking flatness detecting unit 202 may further determine whether there exists a blocking object in blocking detection area 500.

FIG. 7 is an enlarged schematic diagram of blocking detection area 500 of FIG. 5, and FIG. 8 is a histogram of a gray scale of blocking detection area 500 of FIG. 5. It should be noted that in FIG. 8, a maximum gray scale value of the histogram of a gray scale is 253 rather than 255, which is resulted from the filtering processing on FIG. 7.

In this embodiment, the blocking flatness detecting unit 202 calculates the mean square error of the predetermine number of pixels in the blocking detection area 500 on the basis of the histogram of a gray scale of FIG. 8, so as to determine whether there exists a blocking object in the blocking detection area 500. For example, after removing pixels occupying 10% of a total number of pixels of the blocking detection area starting from a pixel of a highest pixel value and pixels occupying 10% of the total number of pixels of the blocking detection area starting from a pixel of a lowest pixel value according to the histogram of a gray scale, by taking the remained pixels occupying 80% of the total number of pixels of the blocking detection area 500 as the predetermined number of pixels, the blocking flatness detecting unit 202 calculates that the mean square error of the gray scale values of the predetermine number of pixels is 18 and the average gray scale value of the predetermine number of pixels is 33, and sets the predetermined threshold value to be 10% of the average gray scale value, i.e. 3.3. As the mean square error is greater than the predetermined threshold value, the blocking flatness detecting unit 202 may determine that there exists a blocking object in blocking detection area 500.

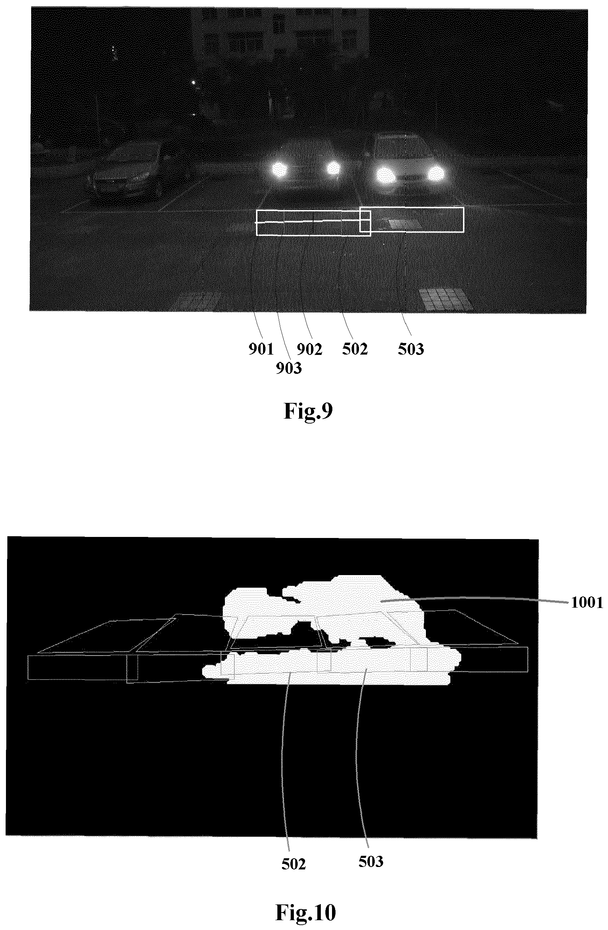

FIG. 9 is another schematic diagram of the parking lot which is not blocked of this embodiment. As shown in FIG. 9, there exists no blocking object in blocking detection areas 502 and 503, parking lots 402 and 403 are not blocked, and lights of vehicles in parking lots 402 and 403 are turned on. In FIG. 9, a white line 901, a black line 902 and a grey line 903 are lines added to the surveillance image artificially, which are used to simulate the marking lines in blocking detection area 502.

FIG. 10 is a schematic diagram of foreground detection to which FIG. 9 corresponds, in which a white pixel 1001 denotes the foreground of the image. As shown in FIG. 10, there exist foregrounds resulted from vehicle lights in blocking detection areas 502 and 503.

In this embodiment, the foreground detecting unit 201 may determine that there exist blocking objects in blocking detection areas 502 and 503 on the basis of the schematic diagram of foreground detection in FIG. 10, in which case the blocking flatness detecting unit 202 further determines whether there exist blocking objects in blocking detection areas 502 and 503.

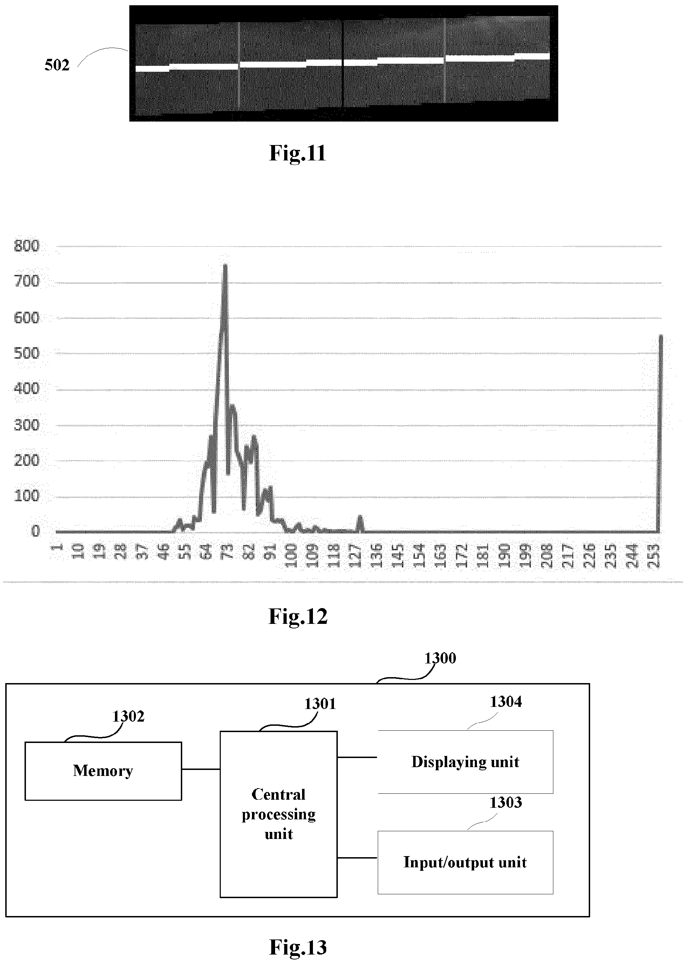

FIG. 11 is an enlarged schematic diagram of blocking detection area 502 of FIG. 9, and FIG. 12 is a histogram of a gray scale of blocking detection area 502 of FIG. 9. In FIG. 12, gray scale values of most pixels are about 73, the gray scale value 73 is a gray scale value of a road in blocking detection area 502, and there exists a powerful pulse in a gray scale value 253, which corresponds to a gray scale value of white line 901 in FIG. 9.

In this embodiment, the blocking flatness detecting unit 202 calculates the mean square error of the predetermine number of pixels in the blocking detection area 502 on the basis of the histogram of a gray scale of FIG. 12, so as to determine whether there exists a blocking object in the blocking detection area 502. For example, after removing pixels occupying 10% of a total number of pixels of the blocking detection area 502 starting from a pixel of a highest pixel value and pixels occupying 10% of the total number of pixels of the blocking detection area 502 starting from a pixel of a lowest pixel value according to the histogram of a gray scale, by taking the remained pixels occupying 80% of the total number of pixels of the blocking detection area 502 as the predetermined number of pixels, the blocking flatness detecting unit 202 calculates that the mean square error of the gray scale values of the predetermine number of pixels is 6 and the average gray scale value of the predetermine number of pixels is 74, and sets the predetermined threshold value to be 10% of the average gray scale value 74, i.e. 7.4. As the mean square error 6 is less than the predetermined threshold value 7.4, the blocking flatness detecting unit 202 may determine that there exists no blocking object in blocking detection area 502. And furthermore, the blocking flatness detecting unit 202 may determine in the same manner that there exists no blocking object in blocking detection area 503.

### Embodiment 2

Embodiment 2 of this disclosure provides electronic equipment, including the detection apparatus of a status of a parking lot as described in Embodiment 1.

FIG. 13 is a schematic diagram of a structure of the electronic equipment of Embodiment 2 of this disclosure. As shown in FIG. 13, the electronic equipment 1300 may include a central processing unit (CPU) 1301 and a memory 1302, the memory 1302 being coupled to the central processing unit 1301. Wherein, the memory 1302 may store various data, and furthermore, it may store a program for information processing, and execute the program under control of the central processing unit 1301.

In an implementation, the functions of the detection apparatus may be integrated into the central processing unit 1301.

In an implementation, the central processing unit 1301 may be configured to:
detect whether there exists a moving object in the parking lot according to the surveillance image of the parking lot;
when there exists no moving object in the parking lot, detect whether there exists a moving object in a blocking detection area of the parking lot in the surveillance image; wherein, the blocking detection area is adjacent to the parking lot;
when there exists no moving object in the blocking detection area, detect whether there exists in the blocking detection area a blocking object blocking the parking lot; and
determine the status of the parking lot according to a detection result of the blocking detecting unit.

The central processing unit 1301 may further be configured to:
perform foreground detection for the blocking detection area, and detect whether there exists the blocking object according to a result of the foreground detection.

The central processing unit 1301 may further be configured to:
perform foreground detection for the blocking detection area in the surveillance image on the basis of background modeling; and
determine that there exists a blocking object in the blocking detection area when a detected foreground of the blocking detection area satisfies a predetermined condition.

The central processing unit 1301 may further be configured to:
detect whether the blocking detection area in the surveillance image is flat, so as to determine whether there exists the blocking object.

The central processing unit 1301 may further be configured to:
detect whether the blocking detection area in the surveillance image is flat according to a relationship between a mean square error or an average absolute error of pixel values of a predetermined number of pixels of the blocking detection area in the surveillance image and a predetermined threshold value; wherein, the predetermined threshold value is determined according to an average pixel value of the predetermined number of pixels of the blocking detection area in the surveillance image.

The central processing unit 1301 may further be configured to:
determine whether there exists the blocking object according to an average gray scale value of the pixels of the blocking detection area in the surveillance image.

The central processing unit 1301 may further be configured to:
when the average gray scale value is greater than a first predetermined value, determine that there exists the blocking object;
when the average gray scale value is less than a second predetermined value, determine that there exists the blocking object;
the first predetermined value is greater than the second predetermined value.

Furthermore, as shown in FIG. 13, the electronic equipment 1300 may further include an input/output unit 1303, and a displaying unit 1304, etc. Functions of the above components are similar to those in the prior art, and shall not be described herein any further. It should be noted that the electronic equipment 1300 does not necessarily include all the parts shown in FIG. 13, and furthermore, the electronic equipment 1300 may include parts not shown in FIG. 13, and the prior art may be referred to.

### Embodiment 3

Embodiment 3 of this disclosure provides a detection method of a status of a parking lot, which detects the status of the parking lot on the basis of a surveillance image of the parking lot, and corresponds to the detection apparatus 100 in Embodiment 1.

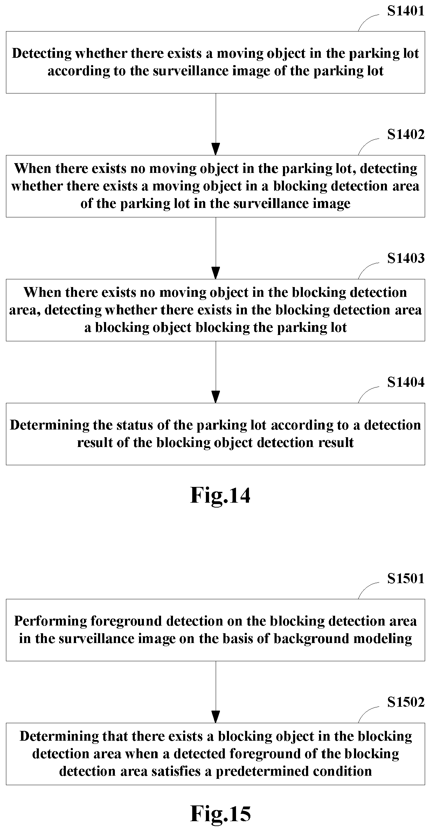

FIG. 14 is a flowchart of the detection method of this embodiment. As shown in FIG. 14, the method includes:
step 1401: detecting whether there exists a moving object in the parking lot according to the surveillance image of the parking lot;
step 1402: when there exists no moving object in the parking lot, detecting whether there exists a moving object in a blocking detection area of the parking lot in the surveillance image; wherein, the blocking detection area is adjacent to the parking lot;
step 1403: when there exists no moving object in the blocking detection area, detecting whether there exists in the blocking detection area a blocking object blocking the parking lot; and
step 1404: determining the status of the parking lot according to a detection result of the blocking object detection result.

In this embodiment, step 1403 may include:
step 14031 (not shown): performing foreground detection for the blocking detection area, and detecting whether there exists the blocking object according to a result of the foreground detection.

FIG. 15 is a flowchart of a method for detecting whether there exists a blocking object on the basis of foreground detection. As shown in FIG. 15, step 14031 includes:
step 1501: performing foreground detection for the blocking detection area in the surveillance image on the basis of background modeling; and
step 1502: determining that there exists a blocking object in the blocking detection area when a detected foreground of the blocking detection area satisfies a predetermined condition.

In this embodiment, step 1403may also include:
step 14032 (not shown): detecting whether the blocking detection area in the surveillance image is flat, so as to determine whether there exists the blocking object.

In this embodiment, step 14032 may also be carried out as follows: detecting whether the blocking detection area in the surveillance image is flat according to a relationship between a mean square error or an average absolute error of pixel values of a predetermined number of pixels of the blocking detection area in the surveillance image and a predetermined threshold value; wherein, the predetermined threshold value is determined according to an average pixel value of the predetermined number of pixels of the blocking detection area in the surveillance image.

In this embodiment, step 1403 may also include:
step 14033 (not shown): determining whether there exists the blocking object according to an average gray scale value of the pixels of the blocking detection area in the surveillance image.

In step 14033, when the average gray scale value is greater than a first predetermined value, it is determined that there exists the blocking object; and when the average gray scale value is less than a second predetermined value, it is determined that there exists the blocking object. The first predetermined value is greater than the second predetermined value.

In this embodiment, description of the units in Embodiment 1 may be referred to for description of the steps, which shall not be described herein any further.

The detection method of a status of a parking lot of this embodiment shall be described below by way of an embodiment.

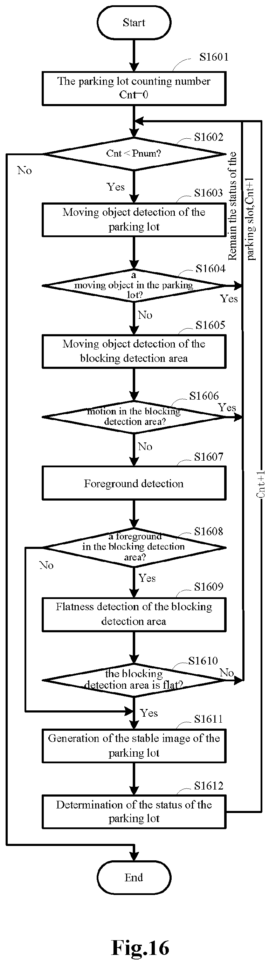

FIG. 16 is a flowchart of the detection method of a status of a parking lot of this embodiment. In FIG. 16, Pnum denotes the number of parking lots in the surveillance image, and Cnt denotes a parking lot counting number. As shown in FIG. 16, the detection method includes:
step 1601: clearing the parking lot counting number Cnt;
step 1602: determining whether the parking lot counting number Cnt is less than the number Pnum of parking lots; if it is determined as "yes", it shows that there exist a parking lot in the surveillance image of which a status is not determined, thus entering step 1603; while if it is determined as "no", ending the process;
step 1603: performing moving object detection on a current parking lot in the surveillance image;
step 1604: determining whether there exists a moving object in the current parking lot; if it is determined as "yes", it shows that the current parking lot is in an unstable status, thus maintaining an original status of the current parking lot, adding 1 to the parking lot counting number Cnt, turning back to step 1602, and starting detection on a next parking lot in the surveillance image; while if it is determined as "no", going to step 1605;
step 1605: performing moving object detection on a blocking detection area in the surveillance image adjacent to the current parking lot;
step 1606: determining whether there exists a moving object in the blocking detection area adjacent to the current parking lot; if it is determined as "yes", it shows that the blocking detection area is in an unstable status, thus maintaining the original status of the current parking lot, adding 1 to the parking lot counting number Cnt, turning back to step 1602, and starting detection on a next parking lot in the surveillance image; while if it is determined as "no", going to step 1607;
step 1607: performing foreground detection on the blocking detection area in the surveillance image adjacent to the current parking lot;
step 1608: determining whether there exists a foreground in the blocking detection area; if it is determined as "no", it shows that there exists no blocking object in the blocking detection area, thus going to step 1611 to generate a stable image of the current parking lot; while if it is determined as "yes", going to step 1609 to further determine whether there exists a blocking object in the blocking detection area;
step 1609: detecting whether the blocking detection area is flat;
step 1610: determining whether the blocking detection area is flat; if it is determined as "no", it shows that there exists a blocking object in the blocking detection area, thus maintaining the original status of the current parking lot, adding 1 to the parking lot counting number Cnt, turning back to step 1602, and starting detection on a next parking lot in the surveillance image; while if it is determined as "yes", it shows that there exists no blocking object in the blocking detection area, thus going to step 1611;
step 1611: generating a stable image of the current parking lot; and
step 1612: determining a status of the current parking lot on the basis of the stable image of the current parking lot, and the above-mentioned application 1 may be referred to for a particular method of determination; adding 1 to the parking lot counting number Cnt after determination of the status of the current parking lot is finished, turning back to step 1602, and starting detection on a next parking lot in the surveillance image.

According to this embodiment, whether there exists a blocking object blocking the parking lot in the blocking detection area adjacent to the current parking lot is detected, and the status of the parking lot is determined according to a result of detection whether there exists the blocking object. Hence, effects of vehicles stably parking on the vehicle lanes around the parking lot on the result of detection of the status of the parking lot may be avoided.

An embodiment of the present disclosure provides a computer readable program, which, when executed in a detection apparatus or electronic equipment, will cause the detection apparatus or the electronic equipment to carry out the detection method as described in Embodiment 3.

An embodiment of the present disclosure provides a computer readable medium, including a computer readable program, which will cause a detection apparatus or electronic equipment to carry out the detection method as described in Embodiment 3.

The detection apparatus described in conjunction with the embodiments of this disclosure may be directly embodied as hardware, software modules executed by a processor, or a combination thereof. For example, one or more functional block diagrams and/or one or more combinations of the functional block diagrams shown in FIGs. 1-3 may either correspond to software modules of procedures of a computer program, or correspond to hardware modules. Such software modules may respectively correspond to the steps described in Embodiment 3. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in FIGs. 1-3 may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams shown in FIGs. 1-3 may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

For implementations of the present disclosure containing the above embodiments, following supplements are further disclosed.
Supplement 1. A detection apparatus of a status of a parking lot, which detects the status of the parking lot on the basis of a surveillance image of the parking lot, the detection apparatus including:
   a parking lot motion detecting unit configured to detect whether there exists a moving object in the parking lot according to the surveillance image of the parking lot;
   a blocking motion detecting unit configured to, when there exists no moving object in the parking lot, detect whether there exists a moving object in a blocking detection area of the parking lot in the surveillance image; wherein, the blocking detection area is adjacent to the parking lot;
   a blocking detecting unit configured to, when there exists no moving object in the blocking detection area, detect whether there exists in the blocking detection area a blocking object blocking the parking lot; and
   a parking lot status determining unit configured to determine the status of the parking lot according to a detection result of the blocking detecting unit.
Supplement 2. The detection apparatus of a status of a parking lot according to supplement 1, wherein the blocking detecting unit includes:
   a foreground detecting unit configured to perform foreground detection for the blocking detection area, and detect whether there exists the blocking object according to a result of the foreground detection.
Supplement 3. The detection apparatus of a status of a parking lot according to supplement 2, wherein the foreground detecting unit includes:
   a foreground detecting sub-unit configured to perform foreground detection for the blocking detection area in the surveillance image on the basis of background modeling; and
   a foreground determining sub-unit configured to determine that there exists a blocking object in the blocking detection area when a foreground of the blocking detection area detected by the foreground detecting sub-unit satisfies a predetermined condition.
Supplement 4. The detection apparatus of a status of a parking lot according to supplement 1, wherein the blocking detecting unit includes:
   a blocking flatness detecting unit configured to detect whether the blocking detection area in the surveillance image is flat, so as to determine whether there exists the blocking object.
Supplement 5. The detection apparatus of a status of a parking lot according to supplement 4, wherein,
   the blocking flatness detecting unit detects whether the blocking detection area in the surveillance image is flat according to a relationship between a mean square error or a mean absolute error of pixel values of a predetermined number of pixels of the blocking detection area in the surveillance image and a predetermined threshold value.
Supplement 6. The detection apparatus of a status of a parking lot according to supplement 5, wherein,
   the predetermined threshold value is determined according to an average pixel value of the predetermined number of pixels of the blocking detection area in the surveillance image.
Supplement 7. The detection apparatus of a status of a parking lot according to supplement 1, wherein the blocking detecting unit includes:
   a blocking gray scale detecting unit configured to determine whether there exists the blocking object according to an average gray scale value of the pixels of the blocking detection area in the surveillance image.
Supplement 8. The detection apparatus of a status of a parking lot according to supplement 7, wherein,
   when the average gray scale value is greater than a first predetermined value, it is determined that there exists the blocking object;
   when the average gray scale value is less than a second predetermined value, it is determined that there exists the blocking object;
   and the first predetermined value is greater than the second predetermined value.
Supplement 9. Electronic equipment, including the detection apparatus of a status of a parking lot as described in any one of supplements 1-8.
Supplement 10. A detection method of a status of a parking lot, which detects the status of the parking lot on the basis of a surveillance image of the parking lot, the detection method including:
   detecting whether there exists a moving object in the parking lot according to the surveillance image of the parking lot;
   when there exists no moving object in the parking lot, detecting whether there exists a moving object in a blocking detection area of the parking lot in the surveillance image; wherein, the blocking detection area is adjacent to the parking lot;
   when there exists no moving object in the blocking detection area, detecting whether there exists in the blocking detection area a blocking object blocking the parking lot; and
   determining the status of the parking lot according to a detection result of the blocking object detection result.
Supplement 11. The detection method of a status of a parking lot according to supplement 10, wherein the detecting whether there exists in the blocking detection area a blocking object blocking the parking lot includes:
   performing foreground detection for the blocking detection area, and detecting whether there exists the blocking object according to a result of the foreground detection.
Supplement 12. The detection method of a status of a parking lot according to supplement 11, wherein the performing foreground detection for the blocking detection area, and detecting whether there exists the blocking object according to a result of the foreground detection, includes:
   performing foreground detection on the blocking detection area in the surveillance image on the basis of background modeling; and
   determining that there exists a blocking object in the blocking detection area when a foreground of the blocking detection area detected by the foreground detecting sub-unit satisfies a predetermined condition.
Supplement 13. The detection method of a status of a parking lot according to supplement 10, wherein the detecting whether there exists in the blocking detection area a blocking object blocking the parking lot includes:
   detecting whether the blocking detection area in the surveillance image is flat, so as to determine whether there exists the blocking object.
Supplement 14. The detection method of a status of a parking lot according to supplement 13, wherein the detecting whether the blocking detection area in the surveillance image is flat, so as to determine whether there exists the blocking object, includes:
   detecting whether the blocking detection area in the surveillance image is flat according to a relationship between a mean square error or a mean absolute error of pixel values of a predetermined number of pixels of the blocking detection area in the surveillance image and a predetermined threshold value.
Supplement 15. The detection method of a status of a parking lot according to supplement 14, wherein,
   the predetermined threshold value is determined according to an average pixel value of the predetermined number of pixels of the blocking detection area in the surveillance image.
Supplement 16. The detection method of a status of a parking lot according to supplement 10, wherein the detecting whether there exists in the blocking detection area a blocking object blocking the parking lot includes:
   determining whether there exists the blocking object according to an average gray scale value of the pixels of the blocking detection area in the surveillance image.
Supplement 17. The detection method of a status of a parking lot according to supplement 16, wherein,
   when the average gray scale value is greater than a first predetermined value, it is determined that there exists the blocking object;
   when the average gray scale value is less than a second predetermined value, it is determined that there exists the blocking object;
   and the first predetermined value is greater than the second predetermined value.

### Further Embodiments

**E1.** A detection apparatus of a status of a parking lot, which detects the status of the parking lot on the basis of a surveillance image of the parking lot, the detection apparatus comprising: a parking lot motion detecting unit configured to detect whether there exists a moving object in the parking lot according to the surveillance image of the parking lot; a blocking motion detecting unit configured to, when there exists no moving object in the parking lot, detect whether there exists a moving object in a blocking detection area of the parking lot in the surveillance image; wherein, the blocking detection area is adjacent to the parking lot; a blocking detecting unit configured to, when there exists no moving object in the blocking detection area, detect whether there exists in the blocking detection area a blocking object blocking the parking lot; and a parking lot status determining unit configured to determine the status of the parking lot according to a detection result of the blocking detecting unit.
**E2.** The detection apparatus of a status of a parking lot according to E1, wherein the blocking detecting unit comprises: a foreground detecting unit configured to perform foreground detection for the blocking detection area, and detect whether there exists the blocking object according to a result of the foreground detection.
**E3.** The detection apparatus of a status of a parking lot according to E2, wherein the foreground detecting unit comprises: a foreground detecting sub-unit configured to perform foreground detection on the blocking detection area in the surveillance image on the basis of background modeling; and a foreground determining sub-unit configured to determine that there exists a blocking object in the blocking detection area when a foreground of the blocking detection area detected by the foreground detecting sub-unit satisfies a predetermined condition.
**E4.** The detection apparatus of a status of a parking lot according to E1, wherein the blocking detecting unit comprises: a blocking flatness detecting unit configured to detect whether the blocking detection area in the surveillance image is flat, so as to determine whether there exists the blocking object.
**E5.** The detection apparatus of a status of a parking lot according to E4, wherein, the blocking flatness detecting unit detects whether the blocking detection area in the surveillance image is flat according to a relationship between a mean square error or a mean absolute error of pixel values of a predetermined number of pixels of the blocking detection area in the surveillance image and a predetermined threshold value.
**E6.** The detection apparatus of a status of a parking lot according to E5, wherein, the predetermined threshold value is determined according to an average pixel value of the predetermined number of pixels of the blocking detection area in the surveillance image.
**E7.** The detection apparatus of a status of a parking lot according to E1, wherein the blocking detecting unit comprises: a blocking gray scale detecting unit configured to determine whether there exists the blocking object according to an average gray scale value of the pixels of the blocking detection area in the surveillance image.
**E8.** The detection apparatus of a status of a parking lot according to E7, wherein, when the average gray scale value is greater than a first predetermined value, it is determined that there exists the blocking object; when the average gray scale value is less than a second predetermined value, it is determined that there exists the blocking object; and the first predetermined value is greater than the second predetermined value.
**E9.** Electronic equipment, comprising the detection apparatus of a status of a parking lot as claimed in any one of E1-8.
**E10.** A detection method of a status of a parking lot, which detects the status of the parking lot on the basis of a surveillance image of the parking lot, the detection method comprising: detecting whether there exists a moving object in the parking lot according to the surveillance image of the parking lot; when there exists no moving object in the parking lot, detecting whether there exists a moving object in a blocking detection area of the parking lot in the surveillance image; wherein, the blocking detection area is adjacent to the parking lot; when there exists no moving object in the blocking detection area, detecting whether there exists in the blocking detection area a blocking object blocking the parking lot; and determining the status of the parking lot according to a detection result of the blocking object detection result.

## Claims

1. A detection apparatus of a status of a parking lot, which detects the status of the parking lot on the basis of a surveillance image of the parking lot, the detection apparatus including:
a parking lot motion detecting unit configured to detect whether there exists a moving object in the parking lot according to the surveillance image of the parking lot;
a blocking motion detecting unit configured to, when there exists no moving object in the parking lot, detect whether there exists a moving object in a blocking detection area of the parking lot in the surveillance image; wherein, the blocking detection area is adjacent to the parking lot;
a blocking detecting unit configured to, when there exists no moving object in the blocking detection area, detect whether there exists in the blocking detection area a blocking object blocking the parking lot; and
a parking lot status determining unit configured to determine the status of the parking lot according to a detection result of the blocking detecting unit.

2. The detection apparatus of a status of a parking lot according to claim 1, wherein the blocking detecting unit includes:
a foreground detecting unit configured to perform foreground detection for the blocking detection area, and detect whether there exists the blocking object according to a result of the foreground detection.

3. The detection apparatus of a status of a parking lot according to claim 2, wherein the foreground detecting unit includes:
a foreground detecting sub-unit configured to perform foreground detection for the blocking detection area in the surveillance image on the basis of background modeling; and
a foreground determining sub-unit configured to determine that there exists a blocking object in the blocking detection area when a foreground of the blocking detection area detected by the foreground detecting sub-unit satisfies a predetermined condition.

4. The detection apparatus of a status of a parking lot according to claim 1, wherein the blocking detecting unit includes:
a blocking flatness detecting unit configured to detect whether the blocking detection area in the surveillance image is flat, so as to determine whether there exists the blocking object.

5. The detection apparatus of a status of a parking lot according to claim 4, wherein,
the blocking flatness detecting unit detects whether the blocking detection area in the surveillance image is flat according to a relationship between a mean square error or a mean absolute error of pixel values of a predetermined number of pixels of the blocking detection area in the surveillance image and a predetermined threshold value.

6. The detection apparatus of a status of a parking lot according to claim 5, wherein,
the predetermined threshold value is determined according to an average pixel value of the predetermined number of pixels of the blocking detection area in the surveillance image.

7. The detection apparatus of a status of a parking lot according to claim 1, wherein the blocking detecting unit includes:
a blocking gray scale detecting unit configured to determine whether there exists the blocking object according to an average gray scale value of the pixels of the blocking detection area in the surveillance image.

8. The detection apparatus of a status of a parking lot according to claim 7, wherein,
when the average gray scale value is greater than a first predetermined value, it is determined that there exists the blocking object;
when the average gray scale value is less than a second predetermined value, it is determined that there exists the blocking object;
and the first predetermined value is greater than the second predetermined value.

9. Electronic equipment, including the detection apparatus of a status of a parking lot as described in any one of claims 1-8.

10. A detection method of a status of a parking lot, which detects the status of the parking lot on the basis of a surveillance image of the parking lot, the detection method including:
detecting whether there exists a moving object in the parking lot according to the surveillance image of the parking lot;
when there exists no moving object in the parking lot, detecting whether there exists a moving object in a blocking detection area of the parking lot in the surveillance image; wherein, the blocking detection area is adjacent to the parking lot;
when there exists no moving object in the blocking detection area, detecting whether there exists in the blocking detection area a blocking object blocking the parking lot; and
determining the status of the parking lot according to a detection result of the blocking object detection result.

11. The detection method of a status of a parking lot according to claim 10, wherein the detecting whether there exists in the blocking detection area a blocking object blocking the parking lot includes:
performing foreground detection for the blocking detection area, and detecting whether there exists the blocking object according to a result of the foreground detection.

12. The detection method of a status of a parking lot according to claim 11, wherein the performing foreground detection for the blocking detection area, and detecting whether there exists the blocking object according to a result of the foreground detection, includes:
performing foreground detection on the blocking detection area in the surveillance image on the basis of background modeling; and
determining that there exists a blocking object in the blocking detection area when a foreground of the blocking detection area detected by the foreground detecting sub-unit satisfies a predetermined condition.

13. The detection method of a status of a parking lot according to claim 10, wherein the detecting whether there exists in the blocking detection area a blocking object blocking the parking lot includes:
detecting whether the blocking detection area in the surveillance image is flat, so as to determine whether there exists the blocking object.

14. The detection method of a status of a parking lot according to claim 13, wherein the detecting whether the blocking detection area in the surveillance image is flat, so as to determine whether there exists the blocking object, includes:
detecting whether the blocking detection area in the surveillance image is flat according to a relationship between a mean square error or a mean absolute error of pixel values of a predetermined number of pixels of the blocking detection area in the surveillance image and a predetermined threshold value.

15. The detection method of a status of a parking lot according to claim 14, wherein,
the predetermined threshold value is determined according to an average pixel value of the predetermined number of pixels of the blocking detection area in the surveillance image.

16. The detection method of a status of a parking lot according to claim 10, wherein the detecting whether there exists in the blocking detection area a blocking object blocking the parking lot includes:
determining whether there exists the blocking object according to an average gray scale value of the pixels of the blocking detection area in the surveillance image.

17. The detection method of a status of a parking lot according to claim 16, wherein,
when the average gray scale value is greater than a first predetermined value, it is determined that there exists the blocking object;
when the average gray scale value is less than a second predetermined value, it is determined that there exists the blocking object;
and the first predetermined value is greater than the second predetermined value.
